# FASCICULE DE BREVET EUROPEEN

(11) **EP 4 406 853 B1**
(45) Date de publication et mention de la délivrance du brevet: **11.03.2026**
(21) Numéro de dépôt: 24151071.8
(22) Date de dépôt: 10.01.2024
(51) Int. Cl.: B64D 37/08, B64D 37/04, B64C 3/34, B64D 37/00

(54) **AÉRONEF COMPORTANT UN RÉSERVOIR DE CARBURANT**
FLUGZEUG MIT EINEM KRAFTSTOFFTANK
AIRCRAFT WITH FUEL TANK

(30) Priorité: 24.01.2023 FR 2300622
(43) Date de publication de la demande: 31.07.2024
(73) Titulaire: AIRBUS OPERATIONS (S.A.S.), 31060 Toulouse (FR)
(72) Inventeur: CAZABONNE, Yannick, 31060 TOULOUSE (FR); CHAULET, Gilles, 31060 TOULOUSE (FR)
(74) Mandataire: Airbus-OPS SAS

(56) Documents cités:
- CN-A- 110 466 784
- US-A- 4 809 934
- US-A1- 2017 129 619
- US-A1- 2017 152 056
- US-A1- 2020 298 954

## Description

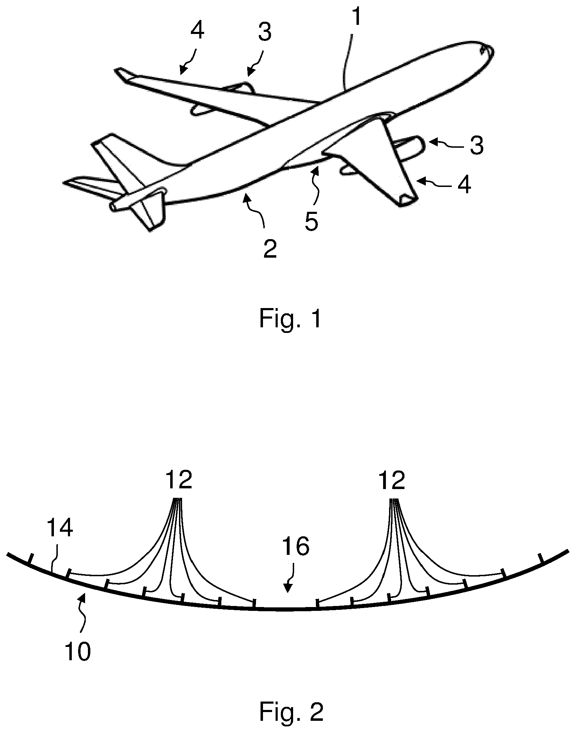

L'invention est relative au domaine des réservoirs de carburant dans les aéronefs. Un aéronef 1 tel qu'illustré sur la figure 1 comporte généralement au moins un réservoir de carburant afin de permettre l'alimentation en carburant de moteurs de propulsion 3 de l'aéronef. Ce réservoir est généralement intégré dans une structure de l'aéronef telle qu'une aile 4, un caisson central de voilure 5, une partie inférieure d'un fuselage 2, etc. Dans un mode de réalisation, une paroi inférieure du réservoir correspond à un panneau de la structure de l'aéronef, par exemple un panneau intrados de l'aile 4 ou un panneau intrados du caisson central de voilure 5. Pour des raisons de tenue structurale, ce panneau est généralement muni de profilés de renfort disposés de façon sensiblement perpendiculaire par rapport au panneau. Cela est notamment le cas lorsque le panneau est un panneau en matériau composite auto-raidi.

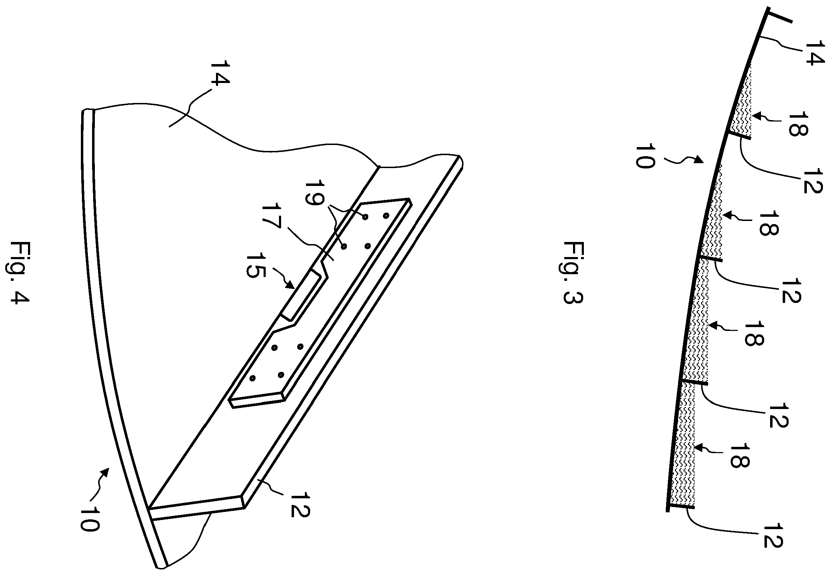

Comme représenté sur la figure 2 et sur la figure 3, un panneau intrados 10 d'une aile ou d'un caisson central de voilure a généralement une forme incurvée de telle façon qu'il existe des zones de rétention de carburant 18 délimitées par les profilés de renfort 12 et par la paroi inférieure 14 du réservoir correspondant au panneau intrados 10. Par conséquent, lorsque le niveau de carburant diminue dans le réservoir, une quantité non négligeable de carburant est retenue dans les différentes zones de rétention, ce carburant ne pouvant pas atteindre une zone de pompage 16 dans une partie inférieure du réservoir pour être pompé vers les moteurs de propulsion de l'aéronef. Par conséquent, ce carburant correspond à une masse que l'aéronef transporte mais qu'il ne peut pas utiliser pour alimenter les moteurs de propulsion.

Pour résoudre ce problème, une solution connue consiste à pratiquer des trous de drainage 15 dans les profilés de renfort 12, comme illustré sur la figure 4, de façon à permettre au carburant contenu dans les zones de rétention 18 de s'écouler vers la zone de pompage 16 située dans la partie inférieure du réservoir. Afin que le fait de pratiquer les trous de drainage n'ait pas pour effet de dégrader les caractéristiques structurales des profilés de renfort, des éclisses de renfort 17 sont fixées aux profilés de renfort 12 à proximité des trous de drainage 15 au moyen de fixations 19. Toutefois, l'ajout des éclisses de renfort entraîne une augmentation non négligeable de la masse de l'aéronef. De plus, la réalisation des trous de drainage et l'installation des éclisses nécessitent des opérations complexes d'usinage ainsi que des opérations d'assemblage qui augmentent le coût de fabrication du réservoir.

Les documents CN 110 466 784 A et US 2017/152056 A divulguent chacun un aéronef comprenant un réservoir de carburant selon l'art antérieur.

### EXPOSE DE L'INVENTION :

La présente invention a notamment pour but d'apporter une solution à ce problème. Elle concerne un aéronef comprenant un réservoir de carburant selon la revendication 1.

L'augmentation de la masse de l'aéronef résultant de l'ajout des systèmes passifs de transfert de carburant est inférieure à l'augmentation de la masse résultant de l'ajout des éclisses de renfort. De plus, ces systèmes sont faciles à installer, sans nécessiter d'opérations complexes d'usinage ou d'installation puisqu'ils ont pour principe de siphonner le carburant contenu dans les zones de rétention pour le transférer vers la zone de pompage. Ainsi, la solution conforme à l'invention présente l'avantage de permettre le drainage du carburant contenu dans les zones de rétention vers la zone de pompage sans entraîner une augmentation trop importante de la masse de l'aéronef, et en réduisant le coût de fabrication du réservoir par rapport à la solution antérieure comprenant l'ajout des éclisses de renfort.

Selon différents modes de réalisation pouvant être pris isolément ou en combinaison :
- chaque système passif de transfert de carburant comprend un tuyau dont une première extrémité est située dans la zone de rétention de carburant et une deuxième extrémité est située dans la partie inférieure du réservoir ;
- le tuyau est conformé de telle façon qu'il comporte un coude à proximité de sa première extrémité, de façon à contourner le profilé de renfort auquel est associée la zone de rétention ;
- la première extrémité du tuyau est située dans une partie basse de la zone de rétention ;
- chaque système passif de transfert de carburant comprend une canalisation de dérivation dont une première extrémité est raccordée au tuyau, à proximité de la deuxième extrémité du tuyau, et dont une deuxième extrémité débouche librement dans la partie inférieure du réservoir ;
- un clapet anti-retour est monté en série sur la canalisation de dérivation de façon à empêcher la circulation de carburant vers la deuxième extrémité de la canalisation de dérivation ;
- chaque système passif de transfert de carburant comprend une vanne à flotteur montée sur la deuxième extrémité du tuyau et conformée de telle façon qu'elle est fermée lorsqu'un niveau de carburant dans la partie basse du réservoir est suffisamment élevé pour relever le flotteur et de telle façon qu'elle est ouverte lorsque le niveau de carburant n'est pas suffisamment élevé pour relever le flotteur.

### DESCRIPTION DETAILLEE:

L'invention sera mieux comprise à la lecture de la description qui suit et à l'examen des figures annexées.
La figure 1, déjà décrite, est une vue d'un aéronef comprenant un réservoir de carburant.
La figure 2, déjà décrite, illustre de façon schématique une partie basse d'un réservoir de carburant de l'aéronef.
La figure 3, déjà décrite, est une vue de détail de la partie basse du réservoir.
La figure 4, déjà décrite, illustre de façon schématique un mode de réalisation selon l'art antérieur, d'une partie basse d'un réservoir de carburant d'un aéronef.
La figure 5 illustre de façon schématique une partie basse d'un réservoir de carburant d'un aéronef comprenant un système de transfert de carburant conformément à un mode de réalisation de l'invention.
La figure 6, similaire à la figure 5, illustre une première étape de remplissage du réservoir.
La figure 7, similaire à la figure 5, illustre une deuxième étape de remplissage du réservoir.
La figure 8, similaire à la figure 5, illustre une troisième étape de remplissage du réservoir.
La figure 9, similaire à la figure 5, illustre une première étape de vidage du réservoir.
La figure 10, similaire à la figure 5, illustre une deuxième étape de vidage du réservoir.
La figure 11, similaire à la figure 5, illustre une troisième étape de vidage du réservoir.
La figure 12, similaire à la figure 5, illustre une quatrième étape de vidage du réservoir, dans laquelle le réservoir est complètement vide.

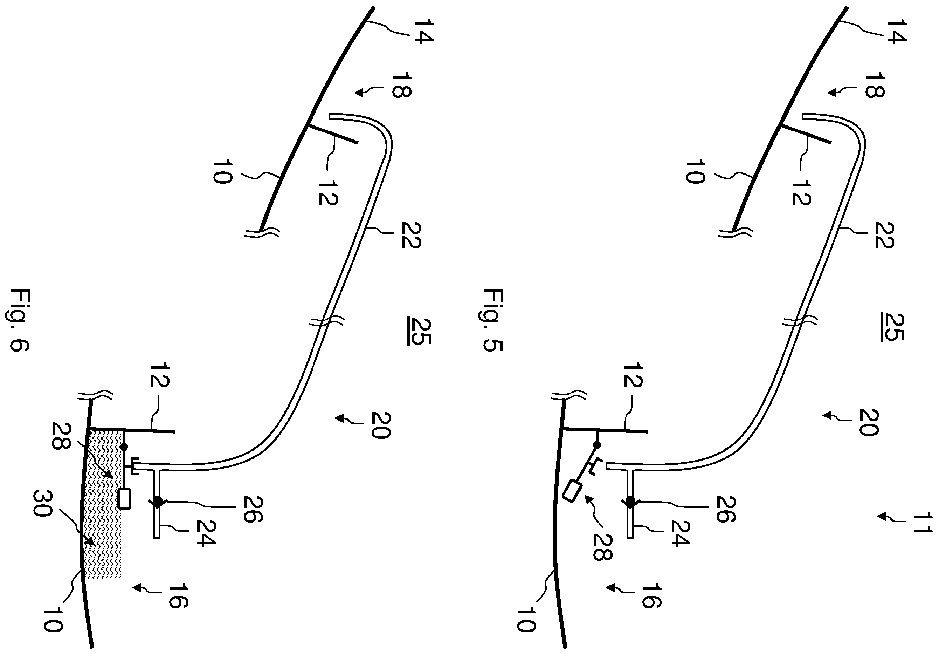

Dans un mode de réalisation de l'invention, un aéronef comprend un réservoir 25 de carburant situé dans une structure de l'aéronef, par exemple dans une aile ou dans un caisson central de voilure de l'aéronef. Une partie basse 11 du réservoir, telle que représentée sur la figure 5, comprend une paroi inférieure 14 correspondant à un panneau 10 de la structure de l'aéronef, par exemple à un panneau intrados de l'aile ou du caisson central de voilure de l'aéronef. Le panneau intrados 10 comprend un ensemble de profilés de renfort 12 solidaires de la paroi inférieure 14 et s'étendant vers l'intérieur du réservoir. Une zone de pompage 16 est prévue dans une partie inférieure du réservoir. Cette zone de pompage correspond notamment à un point bas du réservoir et donc à un point bas de la partie basse 11, comme illustré en partie droite de la figure. La zone de pompage 16 est prévue pour permettre le pompage du carburant vers un consommateur de carburant, par exemple un moteur de propulsion de l'aéronef. Comme indiqué précédemment, un profilé de renfort 12 et la paroi inférieure 14 du réservoir délimitent une zone de rétention de carburant 18 associée à ce profilé de renfort, telle qu'illustrée en partie gauche de la figure. Le profilé de renfort 12 délimitant la zone de rétention 18 est par exemple un profilé de renfort distant de la zone de pompage 16, tel que d'autres profilés de renfort sont positionnés entre ce profilé de renfort 12 et la zone de pompage 16. Pour des raisons de clarté de la figure, ces autres profilés de renfort ne sont pas représentés et par conséquent le panneau intrados est représenté de façon interrompue. Il convient toutefois de considérer que le panneau intrados 10 est continu entre la partie droite et la partie gauche de la figure, de façon similaire au panneau intrados représenté sur la figure 2. Le réservoir de carburant comprend en outre un système passif 20 de transfert de carburant. Le système passif de transfert de carburant s'étend entre la zone 18 de rétention de carburant et la partie inférieure du réservoir dans laquelle est située la zone de pompage 16. Comme cela sera davantage décrit dans la suite de la description, le système passif 20 de transfert de carburant est conformé pour permettre de siphonner du carburant retenu dans la zone de rétention 18 associée au profilé de renfort de façon à transférer ce carburant vers la zone de pompage 16 lorsque le niveau de carburant dans le réservoir est tel que la zone de rétention n'est pas recouverte par du carburant.

Dans le mode de réalisation illustré sur la figure 5, le système passif 20 de transfert de carburant comprend un tuyau 22 dont une première extrémité est située dans la zone de rétention 18 et une deuxième extrémité est située dans la partie inférieure du réservoir. Le tuyau 22 est conformé de telle façon qu'il comporte un coude à proximité de sa première extrémité, de façon à contourner le profilé de renfort 12 auquel est associée la zone de rétention 18.

De façon avantageuse, le système passif 20 comprend en outre une canalisation de dérivation 24 dont une première extrémité est raccordée au tuyau 22, à proximité de la deuxième extrémité du tuyau 22, et dont une deuxième extrémité débouche librement dans la partie inférieure du réservoir. Un clapet anti-retour 26 est monté en série sur la canalisation de dérivation 24 de façon à empêcher la circulation de carburant vers la deuxième extrémité de la canalisation de dérivation 24.

De façon avantageuse, le système passif 20 comprend également une vanne à flotteur 28 montée sur la deuxième extrémité du tuyau 22. Cette vanne à flotteur est par exemple fixée sur un profilé de renfort 12 du panneau 10. La vanne à flotteur 28 est conformée de telle façon qu'elle est fermée lorsqu'un niveau de carburant dans la partie basse du réservoir est suffisamment élevé pour relever le flotteur et de telle façon qu'elle est ouverte lorsque le niveau de carburant n'est pas suffisamment élevé pour relever le flotteur.

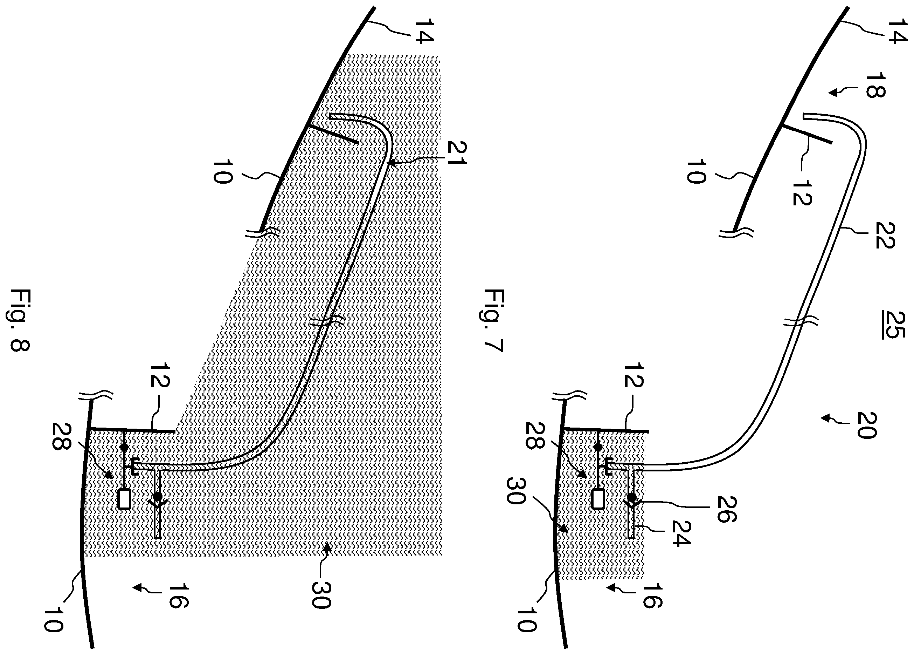

En fonctionnement, lors du remplissage du réservoir 25, le niveau du carburant 30 monte dans la partie basse du réservoir jusqu'à atteindre un premier niveau de remplissage comme illustré sur la figure 6. Cela a pour effet de relever le flotteur de la vanne à flotteur 28 et donc de fermer cette vanne. Par conséquent, la vanne à flotteur 28 ferme alors la deuxième extrémité du tuyau 22. En poursuivant le remplissage du réservoir, le niveau du carburant 30 monte dans la partie basse du réservoir jusqu'à atteindre un deuxième niveau de remplissage comme illustré sur la figure 7. La deuxième extrémité de la canalisation de dérivation 24 est alors immergée et du carburant pénètre alors dans la partie immergée du tuyau 22 via la canalisation de dérivation 24 et le clapet anti-retour 26. En poursuivant encore le remplissage du réservoir, le niveau du carburant 30 monte dans le réservoir jusqu'à atteindre un troisième niveau de remplissage comme illustré sur la figure 8. Ce troisième niveau de remplissage est tel que le profilé de renfort 12 auquel est associée la zone de rétention 18 est immergé dans le carburant. Il en résulte que la zone de rétention 18 est alors remplie de carburant. La zone de rétention 18 est recouverte de carburant puisque le niveau du carburant 30 est tel que le profilé de renfort 12 est immergé dans le carburant. Lors du remplissage du réservoir pour atteindre ce troisième niveau de remplissage, le tuyau 22 continue de se remplir de carburant via la canalisation de dérivation 24. Une bulle d'air 21 peut toutefois rester dans le tuyau 22 à proximité de sa première extrémité.

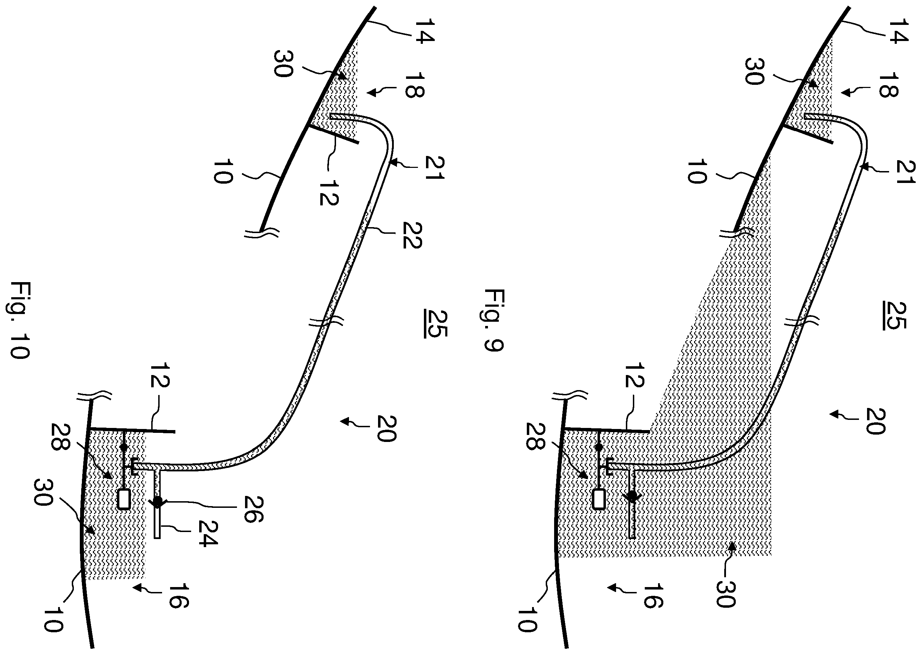

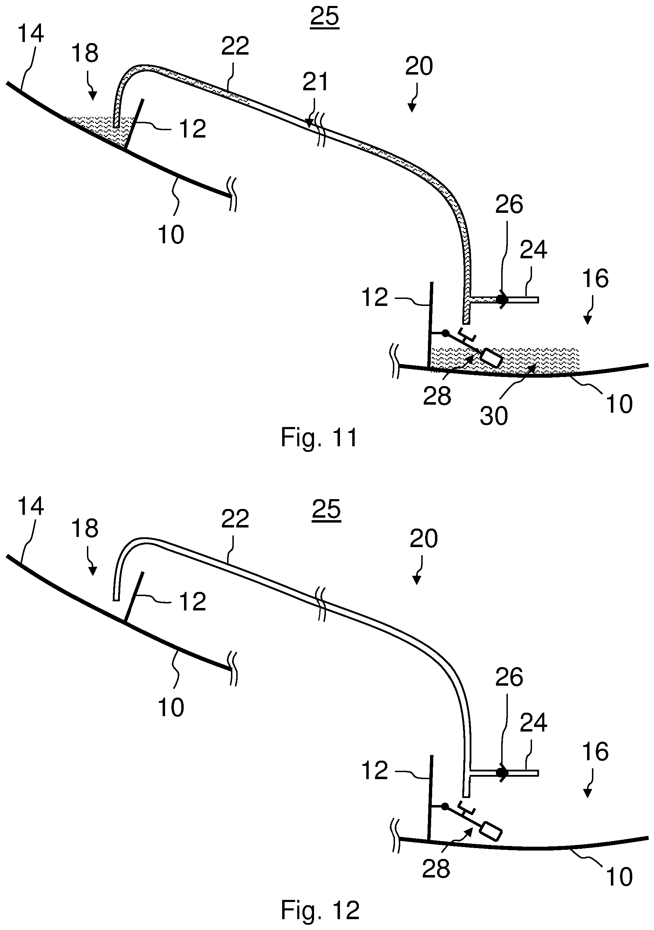

Lors du vidage du réservoir du fait d'un pompage de carburant pour alimenter les moteurs de propulsion de l'aéronef, le niveau de carburant 30 descend dans le réservoir jusqu'à atteindre un premier niveau de vidage comme illustré sur la figure 9. Ce niveau est tel que le profilé de renfort 12 auquel est associée la zone de rétention n'est plus immergé dans le carburant 30 et par conséquent la zone de rétention de carburant 18 n'est plus immergée dans le carburant 30. En d'autres termes, la zone de rétention de carburant 18 n'est plus recouverte de carburant. Toutefois, la zone de rétention 18 reste pleine de carburant. Grâce au clapet anti-retour 26 et à la vanne à flotteur 28, le carburant contenu dans le tuyau 22 reste dans le tuyau. En poursuivant le vidage du réservoir, le niveau du carburant 30 descend dans le réservoir jusqu'à atteindre un deuxième niveau de vidage comme illustré sur la figure 10. La canalisation de dérivation 24 émerge alors du carburant 30. Toutefois, grâce au clapet anti-retour 26, le carburant contenu dans le tuyau 22 reste dans le tuyau. En poursuivant encore le vidage du réservoir, le niveau du carburant 30 descend dans le réservoir de telle façon que ce niveau de carburant n'est plus suffisamment élevé pour relever le flotteur de la vanne à flotteur 28, comme illustré sur la figure 11. Cela a pour effet d'ouvrir la vanne à flotteur. Par conséquent, le carburant contenu dans le tuyau 22 s'écoule par la deuxième extrémité du tuyau vers la zone de pompage 16. Etant donné que la première extrémité du tuyau 22 est immergée dans le carburant contenu dans la zone de rétention 18, le tuyau 22 se comporte comme un siphon et l'écoulement du carburant contenu dans le tuyau a pour effet de siphonner le carburant contenu dans la zone de rétention 18 et donc de vider la zone de rétention 18. L'existence possible de la bulle d'air 21 ne pose pas problème dans la mesure où cette bulle d'air est entraînée vers la deuxième extrémité du tuyau 22 lors de l'écoulement du carburant. Même si cela n'apparaît pas sur les figures pour des raisons de clarté, la première extrémité du tuyau 22 est de préférence positionnée le plus bas possible dans une partie basse de la zone de rétention 18, de façon à permettre le vidage le meilleur possible du carburant contenu dans la zone de rétention 18. Cela permet de transférer de façon quasi complète le carburant contenu dans la zone de rétention 18 vers la zone de pompage 16 et par conséquent de pomper l'ensemble du carburant 30 contenu dans le réservoir. La figure 12 illustre le réservoir 25 à l'issue d'un pompage complet du carburant.

Le système passif 20 de transfert de carburant est avantageux en ce que le siphon formé par le tuyau 22 s'amorce de façon automatique lors du remplissage du réservoir, du fait du remplissage du tuyau 22 via la canalisation de dérivation 24 et du fait que la première extrémité du tuyau 22 est immergée dans le carburant contenu dans la zone de rétention à partir du moment où la zone de rétention 18 se remplit de carburant.

Dans un mode de réalisation, le réservoir 25 comprend un ensemble de systèmes de transfert de carburant similaires au système de transfert de carburant 20 décrit précédemment. Un système de transfert de carburant est associé à une zone de rétention associée à chaque profilé de renfort appartenant à un ensemble de profilés de renfort du panneau 10. Ainsi, lors du vidage du réservoir, cela permet de garantir le vidage de l'ensemble des zones de rétention 18 associées aux différents profilés de renfort appartenant à l'ensemble de profilés. De façon avantageuse, l'ensemble de profilés de renfort correspond à tout ou partie des profilés de renfort du panneau extrados 10 dans la partie basse 11 du réservoir.

## Revendications

1. Aéronef (1) comprenant un réservoir de carburant (25) tel qu'une paroi inférieure (14) du réservoir correspond à un panneau (10) d'une structure de l'aéronef, ce panneau étant muni de profilés de renfort (12), une zone de pompage de carburant (16) étant prévue dans une partie inférieure du réservoir de façon à permettre le pompage du carburant vers au moins un consommateur de carburant, et une zone de rétention de carburant (18) étant associée à au moins un profilé de renfort (12), cette zone de rétention de carburant étant délimitée par la paroi inférieure (14) du réservoir et par le profilé de renfort (12),
tel que :
le réservoir comprend un ensemble de systèmes passifs de transfert de carburant (20), chaque système étant installé entre d'une part une zone de rétention de carburant (18) associée à un profilé de renfort (12) et d'autre part la partie inférieure du réservoir,
chaque système passif de transfert de carburant (20) est conformé pour permettre de siphonner du carburant (30) retenu dans la zone de rétention (18) associée au profilé de renfort (12) de façon à transférer ce carburant vers la zone de pompage (16) lorsque le niveau de carburant dans le réservoir est tel que la zone de rétention n'est plus recouverte par du carburant (30), et
chaque système passif de transfert de carburant (20) comprend un tuyau (22) dont une première extrémité est située dans la zone de rétention de carburant (18) et une deuxième extrémité est située dans la partie inférieure du réservoir, **caractérisé en ce que** chaque système passif de transfert de carburant (20) comprend une vanne à flotteur (28) montée sur la deuxième extrémité du tuyau (22) et conformée de telle façon qu'elle est fermée lorsqu'un niveau de carburant dans la partie basse du réservoir est suffisamment élevé pour relever le flotteur et de telle façon qu'elle est ouverte lorsque le niveau de carburant n'est pas suffisamment élevé pour relever le flotteur.

2. Aéronef selon la revendication 1, **caractérisé en ce que** le tuyau (22) est conformé de telle façon qu'il comporte un coude à proximité de sa première extrémité, de façon à contourner le profilé de renfort (12) auquel est associée la zone de rétention (18).

3. Aéronef selon l'une des revendications 1 ou 2, **caractérisé en ce que** la première extrémité du tuyau (22) est située dans une partie basse de la zone de rétention (18).

4. Aéronef selon l'une quelconque des revendications 1 à 3, **caractérisé en ce que** chaque système passif de transfert de carburant (20) comprend une canalisation de dérivation (24) dont une première extrémité est raccordée au tuyau (22), à proximité de la deuxième extrémité du tuyau, et dont une deuxième extrémité débouche librement dans la partie inférieure du réservoir.

5. Aéronef selon la revendication 4, **caractérisé en ce qu'**un clapet anti-retour (26) est monté en série sur la canalisation de dérivation (24) de façon à empêcher la circulation de carburant vers la deuxième extrémité de la canalisation de dérivation.

## Patentansprüche

1. Luftfahrzeug (1), welches einen Kraftstofftank (25) umfasst, der so beschaffen ist, dass eine untere Wand (14) des Tanks einem Paneel (10) einer Struktur des Luftfahrzeugs entspricht, wobei dieses Paneel mit Verstärkungsprofilen (12) ausgestattet ist, ein Kraftstoffpumpbereich (16) in einem Unterteil des Tanks vorgesehen ist, um das Pumpen des Kraftstoffs zu mindestens einem Verbraucher von Kraftstoff zu ermöglichen, und ein Kraftstoffrückhaltebereich (18) mindestens einem Verstärkungsprofil (12) zugeordnet ist, wobei dieser Kraftstoffrückhaltebereich von der unteren Wand (14) des Tanks und von dem Verstärkungsprofil (12) begrenzt wird,
derart, dass:
der Tank eine Anordnung von passiven Kraftstoffübertragungssystemen (20) umfasst, wobei jedes System zwischen einerseits einem Kraftstoffrückhaltebereich (18), der einem Verstärkungsprofil (12) zugeordnet ist, und andererseits dem Unterteil des Tanks installiert ist,
jedes passive Kraftstoffübertragungssystem (20) dafür ausgebildet ist zu ermöglichen, Kraftstoff (30), der im dem Verstärkungsprofil (12) zugeordneten Rückhaltebereich (18) zurückgehalten wird, abzusaugen, um diesen Kraftstoff zum Pumpbereich (16) zu übertragen, wenn der Kraftstofffüllstand im Tank ein solcher ist, dass der Rückhaltebereich nicht mehr von Kraftstoff (30) bedeckt ist, und
jedes passive Kraftstoffübertragungssystem (20) ein Rohr (22) umfasst, von dem sich ein erstes Ende im Kraftstoffrückhaltebereich (18) befindet und sich ein zweites Ende im Unterteil des Tanks befindet, **dadurch gekennzeichnet, dass** jedes passive Kraftstoffübertragungssystem (20) ein Schwimmerventil (28) umfasst, das am zweiten Ende des Rohres (22) angebracht ist und derart ausgebildet ist, dass es geschlossen ist, wenn ein Kraftstofffüllstand im unteren Teil des Tanks ausreichend hoch ist, um den Schwimmer anzuheben, und derart, dass es geöffnet ist, wenn der Kraftstofffüllstand nicht ausreichend hoch ist, um den Schwimmer anzuheben.

2. Luftfahrzeug nach Anspruch 1, **dadurch gekennzeichnet, dass** das Rohr (22) derart ausgebildet ist, dass es ein Knie in der Nähe seines ersten Endes aufweist, um so das Verstärkungsprofil (12), dem der Rückhaltebereich (18) zugeordnet ist, zu umgehen.

3. Luftfahrzeug nach einem der Ansprüche 1 oder 2, **dadurch gekennzeichnet, dass** sich das erste Ende des Rohres (22) in einem unteren Teil des Rückhaltebereichs (18) befindet.

4. Luftfahrzeug nach einem der Ansprüche 1 bis 3, **dadurch gekennzeichnet, dass** jedes passive Kraftstoffübertragungssystem (20) eine Abzweigleitung (24) umfasst, von der ein erstes Ende an das Rohr (22) in der Nähe des zweiten Endes des Rohres angeschlossen ist und von der ein zweites Ende frei in den Unterteil des Tanks mündet.

5. Luftfahrzeug nach Anspruch 4, **dadurch gekennzeichnet, dass** ein Rückschlagventil (26) in Reihe an der Abzweigleitung (24) angebracht ist, um das Strömen von Kraftstoff zum zweiten Ende der Abzweigleitung zu verhindern.

## Claims

1. Aircraft (1) comprising a fuel tank (25) such that a lower wall (14) of the tank corresponds to a panel (10) of a structure of the aircraft, this panel being provided with reinforcing profiles (12), a fuel pumping zone (16) being provided in a lower portion of the tank for pumping the fuel to at least one fuel consumer, and a fuel retention zone (18) being associated with at least one reinforcing profile (12), this fuel retention zone being delimited by the lower wall (14) of the tank and by the reinforcing profile (12),
such that:
the tank comprises a set of passive fuel transfer systems (20), each system being installed between, on one side, a fuel retention zone (18) associated with a reinforcing profile (12) and, on the other side, the lower portion of the tank,
each passive fuel transfer system (20) is formed to enable the fuel (30) held in the retention zone (18) associated with the reinforcing profile (12) to be transferred by siphoning this fuel to the pumping zone (16) when the fuel level in the tank is such that the retention zone is no longer covered by fuel (30), and
each passive fuel transfer system (20) comprises a pipe (22) having a first end located in the fuel retention zone (18) and a second end located in the lower portion of the tank, **characterized in that** each passive fuel transfer system (20) comprises a float valve (28) mounted on the second end of the pipe (22) and formed so that it is closed when a fuel level in the lower portion of the tank is high enough to raise the float and so that it is open when the fuel level is not high enough to raise the float.

2. Aircraft according to Claim 1, **characterized in that** the pipe (22) is formed in such a way that it includes an elbow in the vicinity of its first end, so as to circumvent the reinforcing profile (12) associated with the retention zone (18).

3. Aircraft according to one of Claims 1 or 2, **characterized in that** the first end of the pipe (22) is located in a lower portion of the retention zone (18).

4. Aircraft according to any one of Claims 1 to 3, **characterized in that** each passive fuel transfer system (20) comprises a bypass line (24) having a first end connected to the pipe (22), in the vicinity of the second end of the pipe, and a second end that opens freely into the lower portion of the tank.

5. Aircraft according to Claim 4, **characterized in that** a non-return valve (26) is mounted in series on the bypass line (24) so as to prevent the fuel from flowing to the second end of the bypass line.
